Europäisches Patentamt

European Patent Office

Office européen des brevets

(19)

(11) Publication number: **0 184 371**
A2

(12)

# EUROPEAN PATENT APPLICATION

(21) Application number: **85308587.6**

(22) Date of filing: **26.11.85**

(51) Int. Cl.⁴: **A 01 L 5/00**
**A 01 L 1/04, A 01 L 7/02**

(30) Priority: **06.12.84 US 679202**

(43) Date of publication of application:
**11.06.86 Bulletin 86/24**

(84) Designated Contracting States:
**AT BE CH DE FR GB IT LI LU NL SE**

(71) Applicant: **McKibben, David P.**
**9695 B Morey**
**Gilroy California 95020(US)**

(72) Inventor: **McKibben, David P.**
**9695 B Morey**
**Gilroy California 95020(US)**

(74) Representative: **Williams, Trevor John et al,**
**J.A. KEMP & CO. 14 South Square Gray's Inn**
**London WC1R 5EU(GB)**

(54) **Therapeutic horseshoe.**

(57) The invention is a therapeutic horseshoe including an impact frame for supporting a horse's foot and a cushioned insert for nesting into an insert depression formed in the upper surface of the impact frame such that the insert provides force absorption and kinetic energy return to a ringlike portion of the sole of the foot. The lower surface of the impact frame preferably includes a front slope and a rear slope which improve shock impact and step characteristics in the foot and are important in specifically preventing and alleviating symptoms of laminitis and navicular disease in horses. An alternate toe-in, toe-out shoe is adapted for correction of unbalanced hoof conditions. The therapeutic horseshoe and the toe-in, toe-out shoe are ideal for use by horse professionals such as farriers, veterinarians and trainers. The shoes are also usable on healthy horses as a preventive measure against causes of lameness and as a racing speed enhancement.

FIG. 5

EP 0 184 371 A2

**0184371**

THERAPEUTIC HORSESHOE

The present invention relates generally to animal husbandry products and more particularly to therapeutic shoes for horses. The predominant current usage of the therapeutic horseshoe of the present invention is in connection with horses suffering lameness or impaired performance due to "toe-in", "toe-out", navicular disease and/or laminitis (also known as "founder").

BACKGROUND ART

The horse is an animal which has changed greatly due to man's intervention in its evolution. When horses were bred for various performance characteristics other, less desirable characteristics were also inherent in the changes. Among these detrimental (at least from the standpoint of foot health) introductions are a reduction of the size of the feet of certain horse breeds and an alteration of the angle of inclination from the leg to the foot in others. Furthermore, the treatment of domestic horses has altered the manner in which the horse lives, runs, reproduces and eats. All of these changes have resulted in special problems occurring in the horse's feet.

Wild horses rarely suffer from lameness unless they are injured in some way. This is true mainly due to the fact that they constantly run on uneven ground, stand in water and otherwise are exposed to environmental factors which wear away the hoof material in the manner in which God and nature intended. Domestic horses are not so lucky. Domestic horses are exposed to much less uneven terrain and spend a great deal more time standing around than wild horses. They are protected from the more harsh and abrasive aspects of nature. Furthermore, special feeds which create other desirable conditions in domesticated horses may have a deleterious effect on the feet. Therefore, it has long been recognized that special care is required to maintain domesticated horses' feet in proper condition. Horseshoes have been the main devices used for this purpose.

A good discussion of some of the problems relating to the feet of horses may be found in the publication entitled The Illustrated Veterinary Encyclopedia for Horsemen put out by Equine Research Inc., 1977 edition, especially in chapter 2. As the authors point out, there is a difference between the "foot" and the "hoof". Contrary to common usage, the hoof is not a term properly applicable to the entire foot but is technically restricted to that portion which no longer constitutes living tissue. Predominantly, what most folks call the hoof wall is really the hoof and what is commonly designated the hoof is, in reality, the foot. In Applicant's earlier filed application entitled "A Cushioned Horseshoe", Serial Number 619,616, the common nomenclature was utilized. However, although the present invention is a modification of, and closely related to, the invention disclosed in the Cushioned Horseshoe application, the more technically correct language has been adopted for the present application.

Two other publications which have dealt with the issue of lameness in horses caused by defects or injuries to the feet and hooves are the books "THE LAME HORSE, CAUSES, SYMPTOMS & TREATMENT" by Dr. James R. Rooney and "LAMENESS IN HORSES" by O. R. Adams. These references, as well as the Encyclopedia, provide a great deal of discussion of the problems encountered by horses with hoof injuries or defects. The special problems known as "toe-in" and "toe-out", which are related to foot conformation, are dealt with in the Encyclopedia at pages 39 to 42; in Rooney at page 135 and following; and in Adams at pages 404 to 410. The problem of navicular disease or damage is discussed in the Encyclopedia at pages 69 to 74; in Rooney at pages 121 to 130; and in Adams at pages 260 to 276 and 413, while that cause of lameness commonly known as laminitis or "founder" is discussed in the Encyclopedia at pages 59 to 66; in Rooney at pages 130 to 134; and in Adams at pages 247 to 259.

A further extensive discussion of navicular disease is found in an entire issue of Equus magazine, June 1984, a special section of which is devoted to various articles relating to the navicular bone and the maladies which affect it. An article beginning on page 48 outlines the importance of blood circulation to navicular function and illustrates the problems that occur when circulation is restricted. This article reflects the common opinion that once navicular disease becomes established it is not possible to reverse its effects.

Another useful reference which includes a good layperson's description explaining the relationship of the various elements of the horse's foot was published by Equus Magazine in Volume 56, pages 24 to 43. The article, entitled "Ingenious Engineering, the Secrets Behind Those Successful Steps" by Emily Kilby with Douglas Leach, PhD., deals with the manner in which a horse's foot operates and with the effect of the environment upon that operation.

From the above publications it may be understood that the bottom surface of a horse's foot includes two significant areas. The exterior rim of the hoof is a horn-like material called a "hoof wall." The hoof wall is analogous to a human fingernail. The inner portion of the bottom foot surface is more recently living material. This area, called the sole, is more analogous to the callous on a finger and is directly continuous with living soft tissue, unlike the hoof wall which has buffering connectors separating it from soft tissues. In normal running the major impact on the shod horse's foot is absorbed through the hoof wall, or horn-like portion, while the sole absorbs only a slight amount, if any, of the impact. This is particularly true on hard ground. On soft ground with an unshod horse, however, the hoof wall actually digs into the turf to a certain degree and the interior sole will directly contact the surface of the ground. This contact is important to proper operation and circulation in the hoof.

- 4 -

0184371

The interior of the hoof includes both bone structures and soft tissues. The lowermost bone is the coffin bone which is supported and hinged at its rearmost portions by the distal sesamoid bone, usually called the navicular bone. The deterioration of the navicular bone, caused by disease or injury, is nearly always critically crippling to the horse. Some sources indicate that the initial injury actually occurs in the tendons and cartilage associated with the navicular bone but the net result is great harm to the horse. Commonly attributed causes are improper heel height, genetic malformation and overly hard running surfaces. Navicular problems are particularly prevalent in jumping horses.

It has long been considered that shoeing horses helps to lessen the effect of impact of the foot on hard ground or such surfaces as race tracks and performance rings. Therefore, numerous developments and inventions have been made in the field of horseshoes. In many cases the object of the shoe has been to attempt to reduce the incidences of lameness.

One area of invention in the horseshoe field has specifically related to attempting to cushion the impact by the use of flexible and shock-absorbing materials as a part of the horseshoe. This has been thought to reduce the opportunity for foot injury and thereby to limit lameness.

Examples of attempts to make cushioned horseshoes are described in U. S. Patent No. 62,867, issued to D. L. McDonell on March 12, 1867; U. S. Patent No. 308,449 issued to W. V. Wallace on November 25, 1884; U. S. Patent No. 371,789 issued to A. W. Robertson on October 18, 1887; U. S. Patent No. 546,145 issued to H. H. Gibbs on September 10, 1895; U. S. Patent No. 620,878 issued to H. E. Bauer on March 14, 1899; U. S. Patent No. 3,288,223 issued to D. Ferguson on November 29, 1966; U. S. Patent No. 3,200,885 issued to L. R. Johnson on August 17, 1965; U. S. Patent No. 3,603,402 issued to R. McDonnell on September 7, 1971; and British Patent No.

1584-339 issued to D. J. Brown on February 11, 1981. Each of these references discloses a horseshoe intended to cushion the impact on the horse's hoof wall and thus improve the lifetime of the hoof.

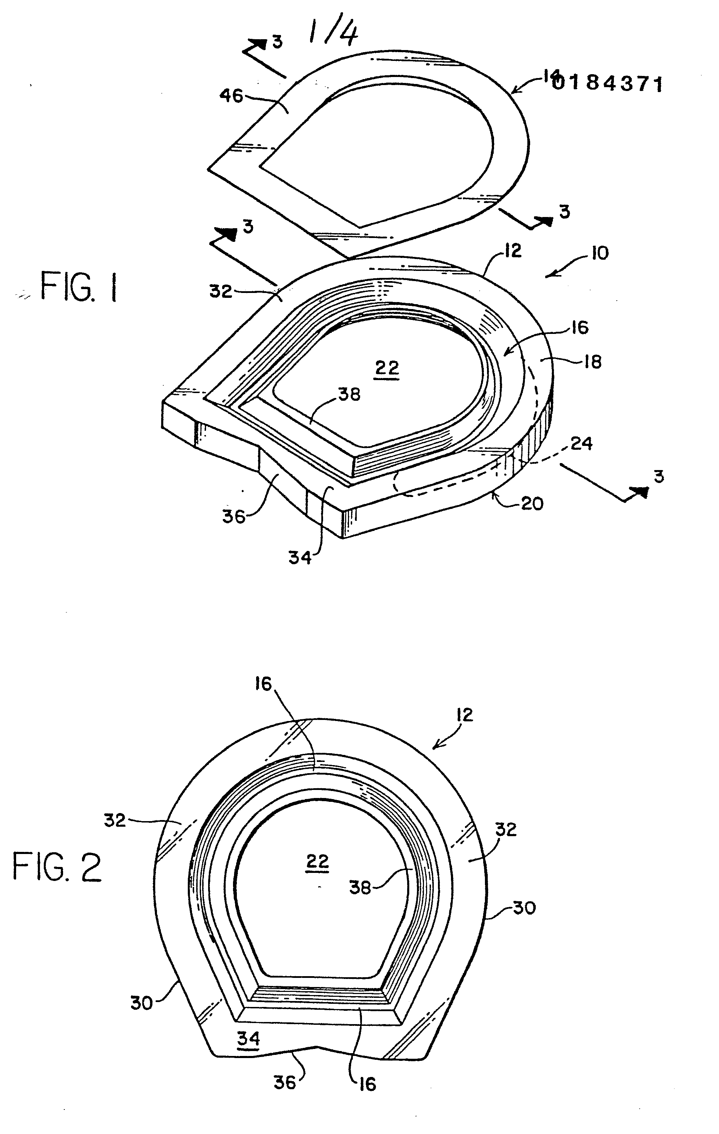

Some attempts have also been made which provide some special support to the heel and frog portions of the hoof. These include a continuous rubber pad such as that shown in Fig. 1 of U. S. Patent No. 1,690,365 issued to R. E. Fruin on November 6, 1928 and a heel spring device such as disclosed in U. S. Patent No. 648,236 issued to A. H. Bush on April 24, 1900. However, even in these patents the frog support was merely a byproduct of ulterior purposes. Apparatus adapted to put direct pressure on the frog and the heels is shown in Adams at pages 411 and 412 (Figs. 9-15 and 9-17). This device is used to correct problems with the frog and is not directly applicable to toe-in, toe-out, laminitis and navicular problems.

A further commercially available flexible type of horseshoe, being of a one-piece flexible plastic material, is known as the Coxton Poly-shoe. This shoe has been made the subject of U. S. Design Patent No. D230,234.

The prior art horseshoes have all been directed at protecting the hoof wall portion of the foot. All are directed to impact the outline of the hoof only, with some rare attention to the frog, and not to relate to the entire area of the lower surface of the foot. The forward portion of the sole, especially, has been ignored. Thus, the prior art horseshoes do not act to spread impact throughout the sole portion of the hoof as well as the hoof wall. The net result of this is that the natural impact heel spreading and circulation pumping action of the hoof is not properly enabled by prior art horseshoes. None of the prior art methods accurately reproduce the conditions of an unprotected hoof on natural terrain in conjunction with their meritorious effects of protecting the hoof wall against

0184371

unnatural terrain. Furthermore the prior art attempts are not directed at reversing the damage, once it has occurred, or in providing therapeutic effects to the lame horse.

0184371

DISCLOSURE OF INVENTION

Accordingly, it is an object of the present invention to provide an improved horseshoe which distributes the pressure of the impact at least partially on the sole of the foot as well as the hoof wall.

It is another object of the present invention to provide a horseshoe which spreads a fraction of the impact evenly around the rimward portions of the sole and thus provides improved circulation within the hoof.

It is a further object of the present invention to provide a horseshoe which is adapted for aiding the rehabilitation of a lame horse.

It is still another object of the present invention to provide a therapeutic horseshoe for correcting problems caused by "toe-in" and "toe-out" conditions.

It is yet another object of the present invention to curb and reverse the effects of "founder" in horses.

It is a still further object of the present invention to reverse, and not merely prevent or alleviate, the effects of navicular disease.

## BRIEF DESCRIPTION OF THE DRAWINGS

One form of horseshoe according to this invention is shown in Figures 1 to 4. Another, preferred form of horseshoe is shown in Figures 5 to 10. In these figures:

Fig. 1 is an exploded perspective view of an improved horseshoe according to the present invention;

Fig. 2 is a top view of the exterior impact frame portion of the invention;

Fig. 3 is a cross-sectional view taken along line 3-3 of Fig. 1; and

Fig. 4 is a bottom view of an alternate embodiment of the invention.

Fig. 5 is an exploded perspective view of a therapeutic horseshoe according to the present invention;

Fig. 6 is a cross-sectional view taken along line 6 - 6 of Fig. 5, showing the therapeutic horseshoe in a non-exploded view;

Fig. 7 is a cross-sectional view taken along line 7 - 7 of Fig. 1;

Fig. 8 is a top view of the present invention with a portion of the cushioned insert cut away;

Fig. 9 is a bottom view of the therapeutic horseshoe of Fig. 5; and

Fig. 10 is a cross-sectional view, taken along line 7 - 7 of Fig. 5, showing an alternate embodiment of the invention.

Referring now to Figures 1 to 4, the improved horseshoe 10 has two major independently formed components, an exterior impact frame 12 and an interior cushioned insert 14. These two elements operate in conjunction to aid in absorption and even distribution of the impact of a shod hoof upon a running surface.

The cushioned interior insert 14 is adapted to nest into an insert depression 16 formed in the upper surface 18 of the impact frame 12. In the preferred embodiment, the insert 14 is secured within the insert depression 16.

Alternatively the horseshoe 10 may be utilized with an insert 14 which is not in any way secured within the frame when the horseshoe 10 is not installed upon the horse's hoof. When the horseshoe 10 is attached to a horse's hoof the insert 14 will be trapped between the lower surface of the hoof and the impact frame 12 and is thus held in position. It has been found, however, that adhering the insert 14 to the frame 12 aids the insert 14 in returning kinetic energy to the hoof and thus improves the horse's performance.

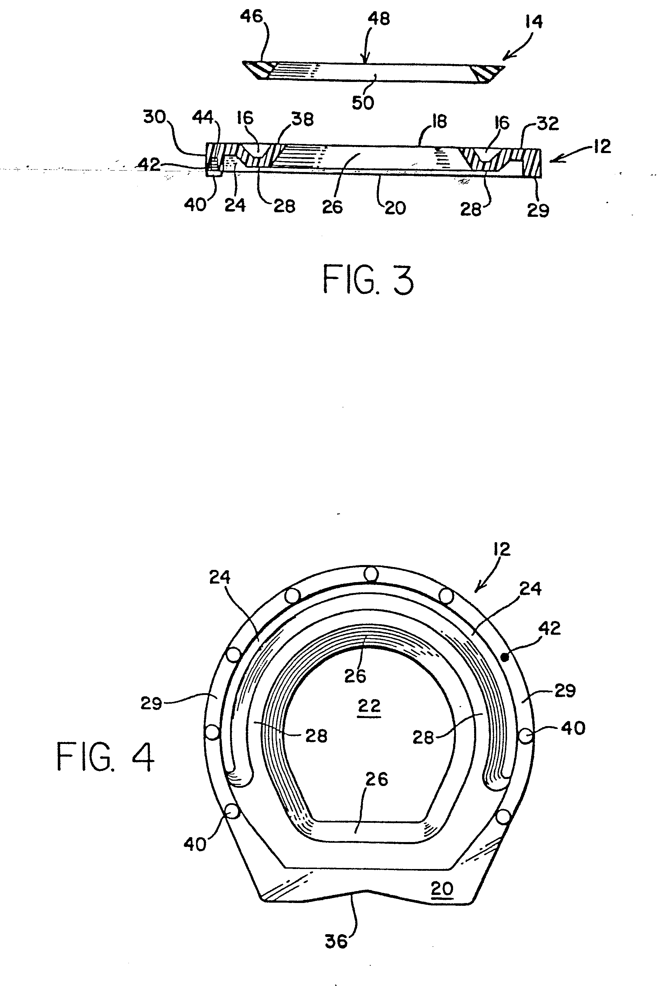

The insert depression 16 is shown, particularly in Fig. 3, to have a cross sectional shape in the form of a triangle. This shape matches that of the insert depression 16. It is not necessary for the insert to extend above the frame since the exterior portions of the sole extend down to abut against the insert 14 while the center portions of the sole are recessed to a greater degree. The insert 14 corresponds with the insert depression 16 but is formed to be compressible therein. This shaping facilitates the expansion of the insert 14 and improves the cushioning effect. The compression and rebound action of the insert 14 within the insert depression 16 provides for the "interior movement" which is a substantial advantage of the horseshoe 10.

As is shown in Fig. 1, and also in Fig. 3, the impact frame 12 is an integrally formed element which has variously shaped portions to serve specific purposes. The impact frame 12 includes the generally planar upper surface 18 and a lower surface 20, the major portion of which is parallel to the upper surface 18. The resultant solid frame 12 is in the form of a complete outline of a horse's hoof. The frame 12 includes a central aperture 22 formed in the middle portion thereof such that the frame 12 comprises an irregular enclosed-ring solid. The central aperture 22 is generally in the shape of a human fingernail and is similar in shape to the overall outline of the impact frame 12. The insert depression 16 is formed on the upper surface 18 such that it surrounds but is not directly adjacent to the central aperture 22.

The lower surface 20 of the impact frame 12 includes a nail slot 24 formed about the curved portion of the impact frame 12. The nail slot 24 is adapted for receiving nails to attach the impact frame to the horse's hoof. The nail slot 24 is of sufficient width to receive a nail head and of sufficient depth that the head may be entirely contained within the nail slot 24 when the nail is fully driven into the hoof. This prevents any actual impact between the ground and the nail. The interiorally disposed side of the nail slot 24 is sloped inward toward the central aperture 22.

The portion of the impact frame 12 which surrounds the central aperture 22 is shaped to form a central incline 26. The central incline 26 is provided such that the width of the central aperture 22 is greater at the lower surface 20 of the frame 12 than it is at the upper surface 18. The central incline 26 is separated from the nail slot 24 by a recessed plateau 28 formed on the lower surface 20. The purpose of the central incline 26 is to provide a wider support surface for the sole of the hoof with the consequent distribution of force from a small impact surface inward along central incline 26 to spread the force over a wide area of the upper surface 18 and consequently to a large area of the sole.

The lower surface 20 of the frame 12 is bordered by a continuous traction rim 29 which extends further downward than the recessed plateau 28. The traction rim 29 is relatively narrow [typically 0.5 cm. (0.2 in.)] such that it will dig in to the surface and provide good traction to the performance horse. The recessed plateau, on the other hand, is recessed such that it does not immediately impact the ground during running. Only when the sole forces downward on the upper surface 18 does the frame 12 deform such that the recessed plateau 28 impacts the ground. A typical recess depth is approximately 0.16 cm (1/16 in.). The material thickness of the frame 12 is greater at the traction rim 29 than at the recessed plateau 28. This is selected because relative rigidity is desired about the impact frame while relative resiliency is desired about the recessed plateau 28.

The upper surface 18 includes, about the circumferential portions thereof, an exterior rim 30. The exterior rim 30 includes a hoof wall portion 32 corresponding to the shaping of the hoof wall and a heel rim 34 extending across the heel of the hoof, where the hoof wall is not continuous. The exterior rim 30 provides the surface upon which the hoof wall rests and further forms the exterior border of the insert depression 16 and thus acts to entrap the insert 14 against the hoof.

The exterior rim 30 is constructed such that impact force is primarily concentrated on the hoof wall. As is shown in Fig. 3, the hoof wall rim portion 32 is inclined slightly outward from lower surface 20 to upper surface 18. Thus the lower surface 20 is marginally narrower overall than is the upper surface 18. This incline results in force vectors being directed upwards into the hoof wall. No incline is required in the heel rim 34 since no portion of the hoof wall abuts against the heel rim 34. The main purpose of the heel rim 34 is to provide continuity and integrity to the horseshoe 10 and to retain the insert 14 in position.

The preferred embodiment of the improved horseshoe 10 further includes a heel wedge 36 formed in the central portion of heel rim 34. The heel wedge 36 is in the shape of a generally obliquely triangular portion of material removed from the impact frame 12 such that a depression in triangular shape is formed in the frame 12. The resultant triangle is formed to have an extremely obtuse apex angle. The shaping of the heel wedge 36 corresponds generally with the heel portion of the horse's hoof. The heel wedge 36 acts to distribute impact on the impact frame 12 to the insert 14 in a more concentrated manner than if the heel rim portion 34 of the impact frame 12 were formed to have a straight edge or if the rear portion of the frame 12 were open, as is the case with most conventional horseshoes.

The upper surface 18 further includes an inner sole support plateau 38. The inner sole support plateau 38 lies radially inward from the insert depression 16. The plateau 38 provides a resting surface for the interior portions, in a ring form, of the horse's sole during running, to the slight degree that these portions actually abut against the shoe. The inner sole support plateau 38 is coplanar with the exterior rim 30 and further acts to retain the insert 14 in position.

As shown in Figs. 3 and 4, certain embodiments of the improved horseshoe 10 include cleats 40 for improving the traction of the horse on differing types of terrain. The cleats 40 are adapted to be removable from the impact frame 12 when they are not needed. In this manner the cleats 40 are substantially similar to the spikes on a golf shoe. In order to receive the cleats 40 the lower surface of the impact frame 12 is provided with a series of cleat attachment holes 42. These will ordinarily be provided with screw threads 44. The screw threads 44 are adapted to receive the screw portions of the cleats 40 and to retain the cleats 40 within the holes. In this manner the cleats remain firmly attached to the impact frame 12 during running and thus provide improved traction.

The entire impact frame 12 is constructed of a reasonably rigid yet somewhat flexible material such as a high-density, non-rigid plastic. The flexibility in all dimensions is desirable for absorbing impact and properly distributing it throughout the horse's hoof. However, integrity of shape and durability are also required for the horseshoe 10 to be of substantial use.

High density polyurethane is the preferred material.

The cushioning insert 14 must also have a certain degree of rigidity, although substantially less than the impact frame 12. The insert 14 is ordinarily constructed of a softer type of plastic than the impact frame 12 and is adapted such that it will distort and expand upon the application of pressure to any of the surfaces. Surgical tubing polyurethane has been found to be adequate.

The shaping of the insert 12 is such that it has a substantially flat top surface 46 which will, in a non-impact circumstance, loosely abut against the circumferential portion of the sole of the horse's hoof. The outline of the insert 14 is shaped to correspond to the outline of insert depression 16. The insert 14, like the frame 12, also provided with an interior aperture 48 which is larger in size than the central aperture 22 of the impact frame 12. The insert 14 has a bottom surface 50 which is in the shape of a wedge. The insert interior aperture 48 is sufficiently large that the insert 14 appropriately nests within the impact frame 12 and the bottom surface 50 of the insert is trapped within and supported by the inclined walls of the insert depression. An adhesive 52 attaches the insert 14 within the depression 16.

During actual use each of the various portions and elements of the horseshoe 10 have specific purposes. Initially the insert 14 is secured within the insert depression 16 by the adhesive 52. The horseshoe 10 is then nailed to the hoof wall by nails inserted in the nail slot 24 and forced through the material of the frame 12 and into the hoof wall. At this point the hoof wall abuts against the exterior rim 30, the outside portions of the sole abut against the insert 14 and a portion of the interior surface of the sole is disposed opposite the support plateau 38.

When an impact occurs the traction rim 29 digs into the ground and arrests the motion of the hoof wall. Momentum forces

0184371

the sole of the hoof downward and forward in a conical fashion. The effect is most pronounced about the edge of the sole and much less so at the center. Thus the primary force from the sole is directed onto the insert 14. Insert 14 compresses within insert depression 16 and absorbs a portion of the force. Continued pressure causes the portions of the frame 12 about the central aperture 22 to deform downward until the recessed plateau 38 abuts against the ground. The resiliency of the frame 12 and the insert 14 cause a return of kinetic energy or rebound against the sole as the momentum is reversed. This causes a pumping action within the soft tissues of the hoof and greatly enhances circulation, in addition to providing a quantity of spring force to the hoof to aid in running.

One typical example of a horseshoe 10 of the present invention includes a frame 12 constructed of high impact, high density polyurethane, selected to be transparent such that proper nailing may be accomplished. The insert 14 is constructed of surgical tubing type polyurethane. It is desirable for show horse uses to construct the insert 14 out of a brightly colored variety for visual effect. An epoxy may be utilized as the adhesive 52.

Horses' hooves come in a wide variety of sizes but a typical horseshoe 10 would have a maximum length of 12.5 cm (4.9 in), a maximum width of 12.5 cm (4.9 in) and a thickness of 1.0 cm (0.4 in). The central aperture 22 is 8 cm (3.2 in) wide at the bottom surface 20 and 6.1 cm (2.5 in) wide at the top surface 18. The nail slot 24 is 0.5 cm (0.2 in) deep and 1.1 cm (0.4 in) across with a flat bottom portion 0.3 cm (0.13 in) in width. The recessed plateau has a width of 0.4 cm (0.17 in) and is recessed 0.16 cm (0.08 in) from the level of the traction rim 29.

The upper surface dimensions include the exterior rim 30 having a width of 1.3 cm (0.5 in) while the insert depression 16 is 1.3 cm (0.5 in) across and 0.5 cm (0.2 in) in depth. The inner sole support plateau 38 is 0.4 cm (0.17 in) in width. The heel wedge 36 is inset 0.4 cm (0.17 in) from the heel rim 34 at apex.

Particular dimensions and materials are not critical to the performance of the horseshoe, so long as the approximate relationships and properties are retained. Various alternate embodiments, such as the aforementioned free-nesting insert, may also be utilized.

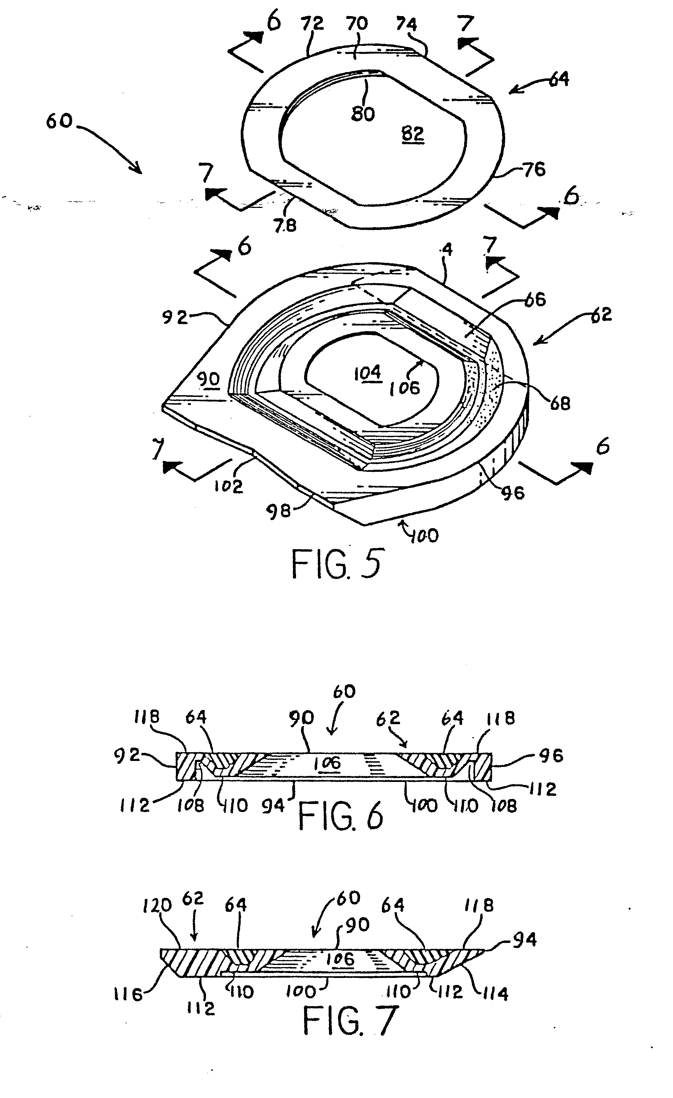

The preferred horseshoe of the present invention is that shown in Figures 5 to 10. Referring now to those figures, the shoe is shown in exploded view in Figure 5 and is designated by the general reference character 60. The two major components of the therapeutic horseshoe 60 are in an exterior impact frame 62 and a cushioned insert 64, adapted to nest within an insert depression 66 formed within the impact frame 62. In the preferred embodiment, the cushioned insert 64 is maintained within the insert depression 66 by an adhesive 68.

The relationship of the various portions of the impact frame 62 and the cushioned insert 64 may be best understood by reference to Figs. 6, 7, 8 and 9 in addition to the exploded perspective view of Fig. 5.

All of the elements of the therapeutic horseshoe 60 exhibit symmetry about a vertical plane passing through the center of the shoe from front to back. Thus, in the basic version of the therapeutic shoe 60, each side of the shoe is equivalent to the other side.

As is shown particularly in Figs. 5, 6, 7 and 8, the cushioned insert 64 includes an upper insert surface 70, a left side portion 72, a front portion 74, a right side portion 76, a rear portion 78 and a bottom surface 80. The cushioned insert 64 forms an enclosed loop element having a center aperture 82 in the central portion thereof.

The insert upper surface 70 is planar and is adapted to align precisely with the upper surface of the impact frame 62. The insert bottom surface 80 is shaped in the same manner as is the insert depression 66 such that the insert 64 fits snugly into the insert depression 66 and there is no slippage during ordinary usage.

Due to the shaping of the insert depression 66, the front or toe portion 74 is wider than the rear or heel portion 78. This is due to the fact that a greater amount of pressure is placed upon the sole of the foot near the toe, where the end of the coffin bone is situated, than in the rear, where the force is delivered to the frog and heel members rather than to the sole. The thickness of the cushioned insert 64 is uniform about its entire circumference. That is, although a lateral cross-section of the insert 64, such as is seen in Figs. 6 and 7 shows that each portion of the insert 64 has varying depth such that it has a trapezoidal cross-section, the same total range of thicknesses applies throughout.

The cushioned insert 64 is constructed of a resilient material which will absorb a certain amount of shock but will then return some of the kinetic energy to the sole portion of the foot. A suitable material has been the plastic utilized in surgical tubing. For visual and aesthetic purposes, it is also desirable that the cushioned insert 64 be constructed to be brightly colored, both to set it apart from the impact frame 12 and also to provide an item with enhanced marketing appeal. Blue is the presently preferred color.

The impact frame 62 includes an impact frame upper surface 90, a left side portion 92, a front portion 94, a right side portion 96, a rear portion 98 and a bottom surface 100. The rear portion 98 of the impact frame 62 includes a rear indentation 102 which involves a triangular-shaped cross-section of material removed from the otherwise straight edge of the rear portion 98.

- 17 -

0184371

The impact frame 62 forms an enclosed loop having a center aperture 104 in the central portion thereof. As is best seen in Figs 6 and 7, the bottom surface 100, in the area surrounding the center aperture 104, includes a central incline 106. Because of the central incline 106, the diameter of the center aperture 104 is greater at the bottom surface 100 than at the top surface 90. One of the purposes served by the central incline 106 is that when the horse's foot impacts crumbly or soft soil a portion of the soil will be forced upward through the center aperture 104 and will impact slightly against the center portions of the sole. The force will be somewhat concentrated because the material will be urged inward by the shape of the central incline 106. This results in some impact being delivered to the center portions of the sole, which is consistent with the occurrences in an unshod horse where soft ground will impact the entire sole and not just the hoof wall.

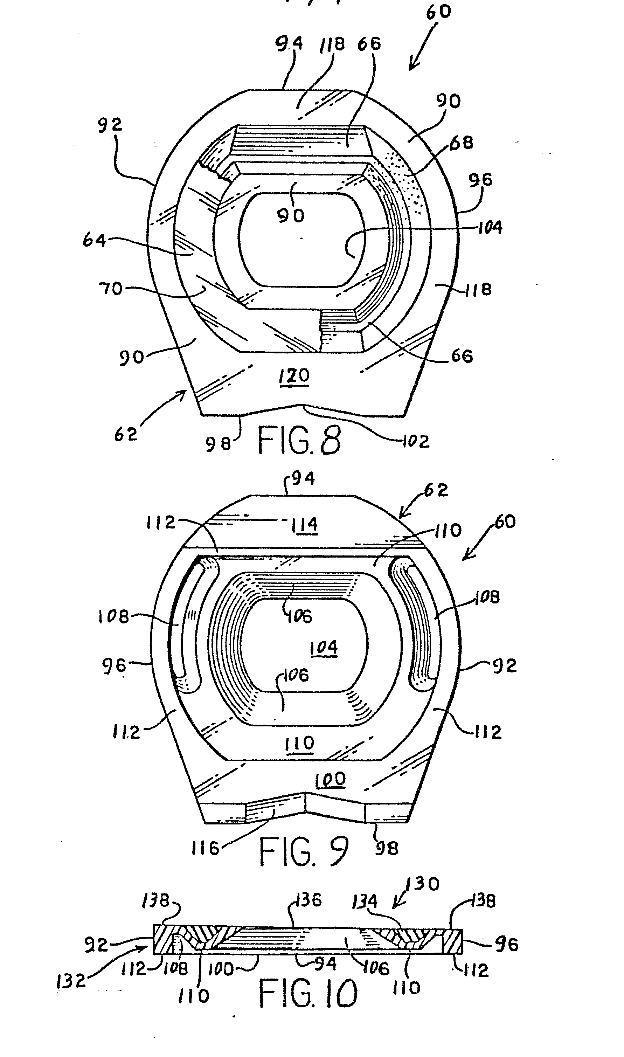

Fig. 9 especially illustrates the lower surface 100 of the impact frame 62. In this illustration it may be seen that, in addition to the central incline 106, the lower surface includes a pair of opposing nail slots 108 in the left portion 92 and the right portion 96, respectively. The nail slots 108 provide an area for putting nails through the shoe 60 and into the hoof wall. These nails hold the shoe 60 in position. The area surrounding the central incline 106 is formed to be a recessed plateau 110, while the outside perimeter portions of the bottom surface 100, at least on the left side 92 and the right side 96, form a traction rim 112. As can be seen from the illustrations of Figs. 6 and 7, the traction rim 112 extends further downward than does the recessed plateau 100.

As is especially apparent from Fig. 7, the traction rim 112 is recessed inward from the front and back edges of the bottom surface 100. In this manner, the impact frame 62 is provided with a front slope portion 114 and a rear slope portion 117. The front or toe slope 114 causes the impact rim 112 in the front portion 94 of the impact frame 62 to be situated significantly rearward of the front of the foot. This results in the initial impact to the foot (in a toe-down or flat landing) occurring not at the extreme toe but rather at a point essentially opposite, although slightly rearward, of the front edge of the coffin bone. The delivery of the impact in the vicinity of the tip of the coffin bone urges the coffin bone to rotate upward such that its tip points more towards the toe and less toward the center of the foot. In this manner, the shoe 60 acts to reverse the tendency of downward rotation of the coffin bone that is a primary symptom of founder. In a healthy foot the design of the therapeutic shoe 60 also acts to prevent any downward rotation of the coffin bone and inhibits the onset of this laminitis symptom.

In addition to its therapeutic value, the front slope 114 acts to permit the foot of the horse to roll forward during a running gait. In this manner the final stages of the impact of the foot with the ground result with the toe being pointed sharply downward into the ground during the push-off stage. This is not only therapeutic in that it aligns the bones of the foot and lower leg properly, but it also acts to direct the force vector at an angle which is more greatly horizontal with respect to the ground surface than would ordinarily be achieved with a flat bottomed horseshoe. The greater the horizontal component of the force vector the greater the forward thrust delivered to the horse. In this manner the same amount of muscular force delivered by the horse will result in an increased amount of forward motion. Thus the horse will be able to run faster without any increased effort. This is particularly important in racing situations.

The rear or heel slope 116 is a much more vertical slope than the front slope 114. The purpose of the heel slope 116 is to provide for a smooth, rolling transition from the initial impact of the foot with the ground during running to the other stages of the impact. Ordinarily during running, the horse's foot will impact the ground heel first and the final stages of the step will have the force on the toe rather than the heel. The heel slope 116 permits the force vector of the initial impact to be delivered to the center of the foot rather than only to the rear portion, which is a better situation for circulation. Additionally, the heel slope permits the foot to roll forward onto the traction rim 112 in such a manner that the foot is more comfortable. The considerations relating to the heel slope 66 are similar to those found in the rounded heel portions of some human running shoes.

The upper surface 90 of the impact frame is essentially planar throughout, except in the insert depression 66. When the insert 64 is held in position within the insert depression 66 by the adhesive 68 the entire upper surface of the therapeutic horseshoe 60 is essentially flat.

The major elements of the top surface 90 are a hoof support platform 118 which encompasses the left side portion 92, the front portion 94 and the right side portion 96 of the impact frame 62, and a heel and frog support platform 120 situated in the rear portion 98. A central platform 122 is intermediate the inner border of the insert depression 66 and the center aperture 104. The central platform 122 serves to define the upper portion of the central incline 106 and to restrain the cushioned insert 64 in position and to provide some impact force to the central areas of the sole.

The hoof support platform 118 is relatively narrow and is adapted to be that portion of the therapeutic shoe 62 upon which the actual hoof wall is supported. Although the entire shoe has a degree of flexibility, the hoof support platform is relatively rigid such that a direct energy force transfer is delivered to the hoof wall from the ground during running and standing. The width of the hoof support platform 118 is selected to closely approximate the width of the hoof wall such that the entire upper surface 70 of the cushioned insert 64 abuts against the sole portion of the foot rather than the hoof wall.

0184371

That portion of the hoof support platform 118 situated in the front portion 94 is situated primarily directly above the toe slope 114. As is especially shown in Fig. 7, it may be seen that this provides that the toe portion of the hoof does not exist directly above any portion of the impact rim 112. Thus, upon a flat hoof impact with the ground, there is no direct force applied to the toe portion of the hoof. The toe impact will occur only after the foot and shoe 60 have rolled forward such that the force is being applied through the front slope 114 during the take-off portion of the step.

The heel and frog support platform 120 is broader, in radial terms, than the hoof support platform 118. In this manner a larger portion of the heel and frog are supported by the frog support platform 120. This is because the heel and frog portions of the foot are not rigid, as is the hoof wall. Since the nail slots 108 are situated significantly forward of the heel and frog support platform 120 a great amount of flexibility is permitted within the hoof at its rear portions. It is extremely important to proper circulation that the heel be permitted to expand and contract with applied and released pressure. For this reason the smooth and relatively rigid upper surface of the heel and frog support platform 120 is extremely valuable during running. Under extreme stress conditions the heel portion of the foot will impact the ground first and with a great degree of force. Once the rolling accomplished by the heel slope 116 has been completed and the force of the foot is delivered to the ground through the traction rim 112 the heel portion of the hoof will be expanded by the downward force. The smooth, rigid upper surface of the heel and frog support platform 120 greatly facilitates this expansion by providing a smooth surface upon which the portions of the heel may slide. In this manner the hoof expansion characteristics of the therapeutic horseshoe 60 represent an improvement even over the natural unshod foot. In an unshod condition the expansion of the heel is restricted in some manner by the ground itself which will naturally resist lateral expansion. With the therapeutic horseshoe 60 in place, however, the hoof is permitted to expand substantially with no additional friction or restriction introduced by the ground since the contact with the ground is maintained by the shoe 60 rather than the heel of the horse's foot.

The central platform 122, which lies radially inward from the insert depression 66, provides, to a certain degree, a resting surface for the interior portions of the horse's sole during running. Although there is ordinarily not a great degree of contact between the inner portions of the sole and the therapeutic shoe 60, under extreme pressure conditions there will be impact with the central platform 122. When this occurs the impact of the sole on the central platform 122 and the cushioned insert 64 will cause the entire shoe to deform such that the recessed plateau 110 is forced downward into contact with the ground surface. This downward force and the subsequent resilient rebound of the insert 64 and the central platform 122 against the sole simulate the unshod hoof and greatly improve the circulation characteristics.

The positioning of the center aperture 104 is selected such that it essentially surrounds the position of the navicular bone in the horse's foot. The location of the navicular bone should be directly above the middle of the center aperture 104. This is valuable in that while force is directed into the sole there is very little if any direct impact force on the portion directly beneath the navicular bone. Minimizing the shock delivered to the navicular bone is important in correcting the symptoms of navicular disease and in preventing its occurrence. Navicular bone condition is also improved by the proper force delivery to the coffin bone, as was described above relating to the front slope 114. Also, the circulation enhancement described above with reference to Figures 1 to 4 as well as Figures 5 to 10 is essential in preventing and alleviating navicular disease.

An alternate preferred embodiment of the therapeutic horseshoe 60 is illustrated in a cross-sectional view of Fig. 10

0184371

and is designated by the general reference character 130. This alternate preferred embodiment 130 is known as a toe-in or toe-out horseshoe. It incorporates all of the components of the preferred therapeutic horseshoe 60 but has its shape modified to specifically deal with horses that have a problem with toe-in or toe-out. The terms toe-in and toe-out are used with respect to horses that have a tendency to have one edge or the other of the hoof impact the ground first and thus the hoof wall will be worn more greatly on one side than the other. This results in the impact being unbalanced. The result of the unbalanced impact is that there is a degree of wobbling in the foot on each impact. The cumulative effect of this wobbling can be damage to the bone and ligament structures of the foot and leg. Ordinarily, toe-in and toe-out conditions, which are essentially identical to each other except for the side of the foot that hits first, are caused by internal conditions such as genetic formation of the foot and leg. However, external factors such as damage to one side of the hoof wall can also result in toe-in or toe-out. The toe-in or toe-out horseshoe 130 is specifically adapted to cause a horse suffering from toe-in or toe-out to have a balanced impact with the ground surface rather than the unbalanced impact caused by using an unmodified shoe. The toe-in, toe-out horseshoe 130 is essentially identical to the therapeutic horsehoe 60 except that all of that portion lying above a selected sloped plane is removed. The toe-in, toe-out horseshoe 130 includes an alternate impact frame 132 and an alternate insert 134. The alternate impact frame 132 has a bottom surface 100 which is identical to that of the preferred impact frame 62. However, the alternate upper surface 136 is no longer parallel to the bottom surface. Modification of the shoe 130 results in either the left side portion being shorter than the right side portion or the reverse, depending upon whether toe-in or toe-out is to be corrected and upon the location of the hoof upon which the shoe 130 is to be installed.

        Assuming that the alternate toe-in, toe-out horseshoe 130 is to be installed upon the right front foot, then the shoe shown in Fig. 10 is designed to correct a toe-in problem. In this instance, the alternate upper surface 136 is sloped downward from left to right such that an alternate support platform 138 is thicker at the left portion 92 than at the right portion 96. Since the horse's hoof will be longer on the right side than on the left, the application of the toe-in, toe-out shoe 130 will cause the net effect to be a balanced flat landing surface at the bottom of the shoe. Once a flat balanced landing surface has been provided, the horse's foot and hoof structure will correct the problem over time such that eventually the toe-in, toe-out shoe will no longer be required and the standard therapeutic horseshoe 60 will be adequate.

It is noted that only the upper portions of the alternate impact frame 132 and the alternate insert are modified in changing a shoe from the preferred therapeutic horseshoe 60 to the toe-in, toe-out shoe 130. In fact, it is possible to construct a toe-in or toe-out shoe from a therapeutic horseshoe 60 by determining the degree of toe-in or toe-out on the particular horse's foot and then using a high quality slicing mechanism to modify the shoe such that it will fit. Of course, the preferred method of creating the toe-in, toe-out shoe 130 is to cast it in its final form.

Horseshoes, like shoes for human beings, come in a variety of sizes. The type of shoe worn by a Shetland Pony will differ drastically in size from that worn by a Clydesdale. Therefore, it is necessary to manufacture the shoes of the present invention in a wide variety of sizes. One typical horseshoe from the middle of the size range would have a maximum length of 12.5 cm (4.9 in), a maximum width of 12.5 cm (4.9 in), and a thickness of 1.0 cm (0.4 in). The central aperture 54 is 8 cm (3.2 in) in width at the bottom surface 50 and 6.1 cm (2.5 in) wide at the top surface 40. The nail slot will typically be 0.5 cm (0.2 in) deep, 5.5 cm (2.4 in) long and 1.1 cm (0.4 in) across with a flat bottom portion having a width of 0.3 cm (0.13 in). The recessed plateau 110 has a width of 0.4 cm (0.17 in) adjacent to the nail slots 108 and is recessed 0.16 cm (0.08 in) from the level of the traction rim 62.

On the upper surface 90, the hoof support platform 118, on either side, has a width of 1.0 cm (0.4 in) while the central support platform 122 has a width of 0.9 cm (0.35 in) on the same radius. The maximum radial width of the heel and frog support platform is approximately 2.2 cm (0.9 in) while the rear indentation 52 has a depth of approximately 0.4 cm (0.18 in).

The insert, and therefore also the insert depression 66, has an upper surface width of 1.4 cm (.55 in) and the left side portion 72, the right side portion 76 and the rear portion 78. The upper surface 70 in the front portion 74 has a width of 2.2 cm (0.85 in). The maximum distance from the insert upper surface 70 to the insert bottom surface 80 is 0.5 cm (0.25 in). The flat portion in the center of the bottom surface 80 has a width of 0.5 cm (0.25 in).

The front slope portion 114 is set to have an angle of approximately 15° from the plane of the bottom surface 100 while the rear slope portion 116 is set at approximately a 35° angle to the plane of the bottom surface 100. The central incline 106 is selected to be angled at approximately 25° from the plane of the bottom surface 100.

The preferred therapeutic horseshoe 60 and toe-in, toe-out shoe 130 include impact frames constructed of high impact, high density polyurethane, selected to be transparent such that proper positioning and nailing is easily accomplished. The preferred material for the impact frame 62 has been found to be manufactured by the Upjohn Company and designated by them as Product Number 37506971. The cushioned insert 64 is constructed of a surgical tubing type of polyurethane. The preferred material is also manufactured by the Upjohn Company and is designated as Product Number 3507271. For show horses

- 25 -

0184371

it is is desirable for aesthetic purposes to cause the cushioned insert to be constructed of a brightly colored version of the plastic. Blue is the presently preferred color. The preferable adhesive 68 is any variety of epoxy adapted to firmly bond the cushioned insert 64 within the insert depression 66.

Particular dimensions and materials are not critical to the performance of the therapeutic horseshoe 60, so long as the approximate relationships and properties are maintained. Materials are restricted by pliability and resiliency restraints, but other than that can be freely selected from a wide variety. Furthermore, various alternate embodiments, such as the toe-in, toe-out horseshoe 130 and embodiments incorporating a free nesting insert, without an adhesive 68, are also contemplated.

Those skilled in the art will readily observe that numerous modifications and alterations may be made without departing from the spirit and scope of the present invention. Accordingly, this disclosure is not intended as limiting and the appended claims are to be interpreted as encompassing the entire scope of the invention.

## INDUSTRIAL APPLICABILITY

The horseshoes 10 of Figures 1 to 4 and the therapeutic horseshoe 60 of Figures 5 to 10 of the present invention are adapted for use on the hooves and feet of horses and closely related animals. Although they are particularly intended for use in alleviating and preventing the specific problems of laminitis, navicular disease and toe-in and toe-out, their preventive functions make them particularly suitable for use on healthy feet as well.

Furthermore, the design of the front slope 64 and the rear slope 66 of the shoe 60 permits a natural rolling gait for the hoof which has a greater horizontal force vector component during the push-off stage. This can result in greater forward force being delivered by the same amount of muscular force. In the course of a race, this improvement can result in a substantial reduction of time. For this reason it is expected that the therapeutic horseshoe shall have very widespread applicability in the racing horse field.

The primary users of the present invention are expected to be horse professionals such as farriers, veterinarians and trainers. These persons are in the best position to determine the nature of the malady affecting the given horse and to utilize the corrective therapeutic horseshoe 60 in the proper manner. Since a very large number of horses, both in the United States and throughout the world, suffer from lameness problems in the nature of laminitis, navicular disease and toe-in and toe-out, it is expected that there will be a very major market for therapeutic horseshoes of this type.

For all of the above reasons it is projected that the present invention will have an extremely widespread industrial applicability and commercial viability.

CLAIMS

1.   An improved horseshoe, comprising:

an exterior impact frame adapted for attachment to a horse's hoof such that the top surface of a portion of the impact frame abuts against the hoof wall portion of the hoof; and

an interior cushion insert adapted to nest within an insert depression formed within the impact frame such that the insert partially abuts against the sole portion of the hoof upon impact;

said impact frame and cushion insert being of plastic material, the plastic material of the impact frame being harder and less compressible than the plastic material of the cushion insert.

2.   A horseshoe of plastic construction comprising:

(a)   an impact frame having a rim which can be nailed to the wall of a horse's hoof, said impact frame being constructed of relatively hard plastic material and

(b)   a softer plastic material within the impact frame which is more easily compressed than the plastic material of the impact frame inwardly of the perimeter of the frame and of the area of the impact frame which is intended to receive nails.

3.   The horseshoe of Claim 2 wherein the impact frame has an inward extension from the rim formed with a groove and the softer plastic material is lodged within said groove.

0184371

4. The horseshoe of Claim 3 wherein the inward extension is flexible and has a bottom surface which is elevated above the bottom surface of the rim of the impact frame.

5. The horseshoe of any of Claims 2, 3 and 4 in which the impact frame and the softer plastic material form closed structures with an opening inwardly of the impact frame and softer plastic.

6. A therapeutic horseshoe, comprising:

an impact frame having an upper surface, a lower surface and a center aperture formed therethrough, wherein the front portion of said bottom surface is formed to include a front slope; and

a cushioned insert adapted to mate with an insert depression formed in said upper surface of the impact frame, the top surface of the cushioned insert adapted to abut against a ringlike portion of the sole of the horse's foot during impact in order to provide force absorption and kinetic energy return thereto.

7. The therapeutic horseshoe of Claim 6 wherein the impact frame further includes:

a left side portion;
a front portion;
a right side portion; and
a rear portion.

0184371

8.    The therapeutic horseshoe of Claim 7 wherein said lower surface further includes:

a pair of nail slots formed respectively in the forward zones of said left side portion and said right side portion;

a ringlike traction rim; and

a recessed plateau formed intermediate said traction rim and said center aperture.

9.    The therapeutic horseshoe of Claim 8 wherein:

in said front portion, said traction rim is situated rearward of said front slope.

10.    The therapeutic horseshoe of Claim 8 wherein:

a central incline is formed intermediate said recessed plateau and said center aperture such that the thickness of the impact frame is greater at said recessed plateau than at the edge of said center aperture.

11.    The therapeutic horseshoe of Claim 8 wherein:

said recessed plateau has a generally planar surface that is situated approximately 0.16 centimeters above the generally planar surface of said traction rim.

12.    The therapeutic horseshoe of Claim 9 wherein:

said front slope is angled upward approximately 15° from the plane of the surface of said traction rim.

0184371

13. The therapeutic horseshoe of Claim 6 and further including:

a rear slope formed in the rearward portion of said bottom surface.

14. The therapeutic horseshoe of Claim 13 wherein:

said rear slope is angled upward at approximately 35° from said bottom surface.

15. The therapeutic horseshoe of Claim 7 wherein said upper surface is generally planar and further includes:

a hoof support platform exteriorally abutting said insert depression in said left side portion, said front portion and said right side portion;

a heel and frog support platform exteriorally abutting said insert depression in said rear portion; and

a central platform interiorally abutting said insert depression.

16. The therapeutic horseshoe of Claim 6 wherein the cushioned insert has a generally trapezoidal cross section and further includes:

a bottom surface adapted to fit snugly into said insert depression such that said top surface fits flush with said upper surface of the impact frame.

17. The therapeutic horseshoe of Claim 7, being modified to form a toe-in, toe-out shoe, wherein:

a portion of said upper surface and a portion of said top surface are removed such that the resulting plane of said upper surface and said top surface is at an angle to the plane of said lower surface.

18. The therapeutic horseshoe of Claim 17 wherein:

the impact frame is thicker at its left edge than at its right edge with a constant rate of decrease proceeding from left to right.

19. The therapeutic horseshoe of Claim 17 wherein:

the impact frame is thicker at its right edge than at its left edge with a constant rate of decrease proceeding from right to left.

20. In a cushioned horseshoe including: an impact frame in the form of the exterior portions of a horse's foot having a generally planar lower surface, a generally planar upper surface, and a center aperture; and a cushioned insert adapted to mate with an insert depression formed in the upper surface of the impact frame surrounding and displaced outward from the center aperture, the cushioned insert being adapted to abut against a ringlike portion of the sole of the horse's foot during impact so as to provide force absorption and kinetic energy return thereto; the improvement comprising:

forming the forward portion of the impact frame to include a front slope, with said front slope being angled upward from the plane of the lower surface.

- 32 -

0184371

21. The improvement of Claim 20 wherein:

the angle of incline of said front slope is approximately 15° from the plane of the lower surface.

22. The improvement of Claim 20 wherein:

the lower surface is provided with a traction rim, the forward portion of said traction rim being situated immediately rearward of the front slope.

23. The improvement of Claim 20 wherein:

the rear edge of the front slope is situated below and slightly rearward of the tip of the coffin bone in the horse's foot.

24. The improvement of Claim 20 and further including:

a rear slope formed on the lower surface.

25. The improvement of Claim 24 wherein:

the rear slope is at an angle of approximately 35° from the plane of the lower surface.

1/4

0184371

FIG. 1

FIG. 2

0184371

**FIG. 3**

**FIG. 4**

FIG. 5

FIG. 6

FIG. 7

4/4

FIG. 8

FIG. 9

FIG. 10